# EUROPEAN PATENT APPLICATION

(11) **EP 4 742 382 A1**
(43) Date of publication of application: **13.05.2026**
(21) Application number: 24835376.5
(22) Date of filing: 03.07.2024
(51) Int. Cl.: H01M 50/107, H01M 6/00, H01M 50/169, H01M 50/131, H01M 50/531, H01M 50/528, H01M 50/609, H01M 50/636, H01M 50/152, H01M 10/04

(54) **BATTERY AND ASSEMBLY METHOD THEREFOR**

(30) Priority: 03.07.2023 CN 202310810840
(71) Applicant: SVOLT Energy Technology Co., Ltd., Changzhou, Jiangsu 213200 (CN)
(72) Inventor: YUAN, Yue, hangzhou, Jiangsu 213200 (CN)
(74) Representative: Michalski Hüttermann & Partner Patentanwälte mbB
(86) International application number: PCT/CN2024/103406
(87) International publication number: WO 2025/007896

(57) **Abstract**

The present application relates to the technical field of batteries, and discloses a battery and an assembly method therefor. The battery includes: a shell having a first end and a second end that are arranged opposite, where the first end is configured as a first open end, an edge of the second end extends along a radial direction of the shell towards an axis direction of the shell to form an extension ring, a central area of the extension ring forms a second open end, and the second open end is smaller than the first open end; an electrode assembly mounted in the shell; a positive electrode cover plate arranged at the first end of the shell and fixedly connected to the shell to seal the first open end; a positive electrode column mounted on the positive cover plate in an insulating manner and electrically connected to a positive electrode of the electrode assembly; and a negative electrode cover plate arranged at the second end of the shell and electrically connected to a negative electrode of the electrode assembly, where the negative electrode cover plate is fixedly connected to at least a portion of the extension ring to seal the second open end. The present application changes conventional peripheral welding to top straight welding, achieving easy operation, high welding efficiency, good connection performance, large welding area, and good battery performance.

## Description

### CROSS REFERENCE TO RELATED APPLICATION

The present application claims priority to Chinese Patent Application No. CN202310810840.3 filed with the China National Intellectual Property Administration on July 3, 2023, and entitled "BATTERY AND ASSEMBLY METHOD THEREFOR", which is incorporated herein by reference in entirety.

### TECHNICAL FIELD

The present application relates to the technical field of batteries, and specifically relates to a battery and an assembly method therefor.

### BACKGROUND ART

Currently, batteries on the market mainly include components such as a shell, an electrode set, an electrode column, and a negative electrode cover plate, where the shell is insulated from and hermetically connected to the electrode column, the electrode column is connected to the electrode set by a positive electrode connecting piece, the negative electrode cover plate is connected to the electrode set by a negative electrode connecting piece, and a sealing cover plate and a sealing nail are further provided at an injection hole on the negative electrode cover plate. In the battery assembly process, the positive/negative electrode connecting piece and the electrode set, the positive electrode connecting piece and the electrode column, the negative electrode connecting piece and the shell, the negative electrode cover plate and the negative electrode connecting piece, the negative electrode cover plate and the shell, are all connected by welding. The negative electrode connecting piece, the negative electrode cover plate, and the shell are usually peripherally welded, that is, a peripheral edge of the negative electrode connecting piece and an inner wall of the shell abut against each other and are welded at the abutting position, and a peripheral edge of the negative electrode cover plate and an edge of the shell abut against each other and are welded at the abutting position. The welding follows the peripheral edge of the negative electrode connecting piece and the peripheral edge of the negative electrode cover plate, to achieve relative fixation of the negative electrode connecting piece and the negative electrode cover plate with the shell.

However, the peripheral welding method suffers from low processing efficiency, limited welding area, and poor post-welding connection performance, resulting in poor battery performance and quality problems.

### SUMMARY

In view of this, the present application provides a battery and an assembly method therefor to solve the problems of low efficiency, small welding area, and poor performance of peripheral welding methods for batteries.

In a first aspect, the present application provides a battery including: a shell having a first end and a second end that are arranged opposite, where the first end is configured as a first open end, the second end is configured with an extension ring, the extension ring extends from an edge of the second end along a radial direction of the shell towards an axis direction of the shell, a central area of the extension ring forms a second open end, and the second open end is smaller than the first open end; an electrode assembly mounted in the shell; a positive electrode cover plate arranged at the first end of the shell and fixedly connected to the shell to seal the first open end; a positive electrode column mounted on the positive cover plate in an insulating manner and electrically connected to a positive electrode of the electrode assembly; and a negative electrode cover plate arranged at the second end of the shell and electrically connected to a negative electrode of the electrode assembly, where the negative electrode cover plate is fixedly connected to at least a portion of the extension ring to seal the second open end.

Beneficial effect: By designing the second end of the shell to form the extension ring, after the electrode assembly is mounted into the shell from the first end, the extension ring not only supports and limits the electrode assembly, but also overlaps with the negative electrode cover plate. The negative electrode cover plate overlaps at least a portion of the extension ring, so compared to the conventional connection method that the edge of the negative electrode cover plate abuts against the shell, the contact area between the negative electrode cover plate and the shell increases, and the negative electrode cover plate can be welded to the extension ring from the outside of the shell. The conventional peripheral welding is changed to top direct welding, achieving easy assembly, high welding efficiency, easy detection and operation, and high connection reliability, increasing the welding area, reducing battery performance problems, improving product yield, and lowering manufacturing costs.

In an optional implementation, the shell is constructed in a cylindrical shape, a diameter of a cross-section of the shell that is perpendicular to an axis of the shell is D', and an extension dimension of the extension ring in the radial direction of the shell is L1, where 0.06 ≤ L1/D ≤ 0.12.

Beneficial effect: Designing a value range of L1/D between 0.06 and 0.12 can ensure sufficient strength of the extension ring, improve stability, provide sufficient welding area and sufficient current-carrying capacity, and improve battery performance.

In an optional implementation, the extension ring includes a first ring portion and a second ring portion, the second ring portion is located on an inner side of the first ring portion in the radial direction of the shell, the second ring portion is higher than the first ring portion, and the negative electrode cover plate is welded to the second ring portion on a side of the second ring portion that faces the outside of the shell.

Beneficial effects: By designing the second ring portion of the extension ring to be higher than the first ring portion, and welding the negative electrode cover plate to the second ring portion, on the one hand, the negative electrode cover plate can be fixedly connected to the extension ring, and on the other hand, after the negative electrode cover plate is overlapped on the second ring portion, the lower surface of the negative electrode cover plate is flush with the lower surface of the first ring portion, thereby maintaining the flatness and aesthetics of the overall structural appearance, and improving the stability of the battery when placed.

In an optional implementation, a dimension of the second ring portion in the radial direction of the shell is L2, where 0.02 ≤ L2/D ≤ 0.04.

Beneficial effect: Designing a value range of L2/D between 0.02 and 0.04 can ensure sufficient current-carrying area between the second ring portion and the negative electrode cover plate, as well as between the first ring portion and the electrode assembly, thereby ensuring current-carrying capacity and improving battery performance.

In an optional implementation, the electrode assembly includes: an electrode set; a positive electrode connecting piece arranged between the electrode set and the positive electrode column, where one side of the positive electrode connecting piece is electrically connected to a positive electrode of the electrode set and the other side of the positive electrode connecting piece is electrically connected to the positive electrode column; and/or a negative electrode connecting piece arranged between the negative electrode cover plate and the electrode set, where one side of the negative electrode connecting piece is electrically connected to the negative electrode cover plate and the other side of the negative electrode connecting piece is electrically connected to a negative electrode of the electrode set.

Beneficial effect: The positive electrode connecting piece electrically connects the positive electrode column to the positive electrode of the electrode set, and the negative electrode connecting piece electrically connects the negative electrode cover plate to the negative electrode of the electrode set, so the connections are convenient and stable.

In an optional implementation, the negative electrode connecting piece includes an electrode set welding area and a cover plate welding area, the cover plate welding area is arranged around the electrode set welding area, the electrode set welding area protrudes upward relative to the cover plate welding area, the electrode set welding area is welded to the electrode set, and the cover plate welding area is welded to the first ring portion.

Beneficial effect: Designing the electrode set welding area to protrude upward relative to the cover plate welding area facilitates the welding of the electrode set welding area to the electrode set, and also facilitates the welding of the cover plate welding area to the first ring portion. In addition, the welding between the cover plate welding area and the first ring portion achieves electrical connection between the negative electrode connecting piece and the shell. The conventional peripheral welding for the negative electrode connecting piece is changed to top direct welding from the outside of the bottom surface of the shell, reducing operation difficulty and increasing the welding area. Meanwhile, the welding between the negative electrode cover plate and the second ring portion on the shell achieves electrical connection between the negative electrode cover plate and the shell, thereby achieving electrical connection between the negative electrode connecting piece and the negative electrode cover plate, achieving good integrity, and ensuring reliable connection between the negative electrode of the electrode set and the outside.

In an optional implementation, the negative electrode cover plate includes: an injection area arranged at a central position of the negative electrode cover plate, where the injection area is provided with an injection hole; and/or a recessed area arranged around the injection area, where the recessed area is lower than the injection area and flush with the first ring portion; and/or a raised area arranged around the recessed area, where the raised area is higher than the recessed area and flush with the injection area; and/or an overlap area arranged around the raised area, where the overlap area is lower than the raised area and flush with the recessed area, and the overlap area overlaps with the second ring portion.

Beneficial effect: By designing the recessed area around the injection area and designing the recessed area to be lower than the injection area, the injection area is higher than the recessed area, the injection area is located relatively above the recessed area, and the injection area protrudes upward relative to the recessed area to form an accommodating space for mounting the sealing cover plate. In addition, the lower surface of the sealing cover plate is maintained flush with the lower surface of the entire negative electrode cover plate, thereby maintaining the flatness of the overall appearance. The raised area is beneficial to increasing the overall strength of the negative electrode cover plate, and ensures the flatness of the recessed area and the overlap area. The raised area is flush with the injection area for easy processing. The overlap area is lower than the raised area and flush with the recessed area, facilitating the overlap between the overlap area and the second ring portion, and ensuring that the lower surface of the negative electrode cover plate is flush with the lower surface of the shell after overlap, to maintain the stability of the battery when placed.

In an optional implementation, a wall thickness of the shell is H, and a lower surface of the injection area is higher than a lower surface of the recessed area by H1, where 1.5 ≤ H1/H ≤ 2.5; and/or
a connecting portion between the injection area and the recessed area is an inclined annular surface arranged at an angle with the axis of the shell, and an angle between the inclined annular surface and the axis of the shell is θ, where 15° ≤ θ ≤ 60°; and/or

Beneficial effect: Designing a value range of H1/H between 1.5 and 2.5 not only facilitates molding, but also can maintain sufficient strength and increase volume utilization; and/or
a side of the inclined annular surface that faces the outside of the shell provides guidance for the sealing cover plate during mounting, has a certain positioning and guiding effect, and facilitates the mounting of the sealing cover plate. The angle θ between the inclined annular surface and the axis of the shell is 15° to 60°, which facilitates the positioning and mounting of the sealing cover plate and facilitates processing.

In an optional implementation, the battery further includes a sealing cover plate, and the sealing cover plate is arranged in the injection area to seal the injection hole.

Beneficial effect: By designing the sealing cover plate in the injection area, the injection hole can be closed to ensure the sealing property of the battery.

In an optional implementation, the positive electrode cover plate includes a cover plate body, a groove ring portion, and an edge ring portion connected in sequence from the inside out along a radial direction of the positive electrode cover plate, the cover plate body is flush with the edge ring portion, the groove ring portion is recessed downward relative to the cover plate body and the edge ring portion, the cover plate body is configured with a mounting hole, the positive electrode column is inserted into the mounting hole, a side wall of the groove ring portion that faces the shell abuts against an inner wall of the shell, and a lower surface of the edge ring portion abuts against an upper end surface of the shell, where a dimension of the edge ring portion in the radial direction of the positive electrode cover plate is L3, a lower surface of the groove ring portion is lower than the lower surface of the edge ring portion by H3, L3=H, and 1.2 ≤ H3/H ≤ 2.5.

Beneficial effect: The positive electrode cover plate is provided with the groove ring portion recessed downward relative to the cover plate body and the edge ring portion, and the groove ring portion is located near the edge of the positive electrode cover plate, so when the positive electrode cover plate is mounted to the first open end of the shell, the lower surface of the edge ring portion abuts against the upper end of the shell, achieving axial limit of the positive electrode cover plate. Meanwhile, the side wall of the groove ring portion near the edge of the positive electrode cover plate abuts against the inner wall of the shell, further increasing radial limit between the positive electrode cover plate and the shell, and increasing relative stability between the two. In addition, the side wall of the groove ring portion is welded to the shell, and the edge ring portion is welded to the upper end of the shell, with an increase in welding area, high connection strength, and good stability. By designing the dimension L3 of the edge ring portion in the radial direction of the positive electrode cover plate to be equal to the wall thickness H of the shell, and designing the edge ring portion to directly overlap with the upper end of the shell, when the side wall of the groove ring portion abuts against the inner wall of the shell, the outer edge of the positive electrode cover plate can be exactly flush with the outer wall of the shell, thereby making the overall appearance smooth and tidy, and avoiding unnecessary damage. Deigning the ratio of H3 to H to be 1.2 to 2.5 not only facilitates processing, but also reduces the size of the battery in the up-down direction.

In a second aspect, the present application further provides a battery assembly method, where the battery assembly method is used to assemble the aforementioned battery, and the battery assembly method includes: welding the electrode set in the electrode assembly to the negative electrode connecting piece to form a first assembly; mounting the first assembly into the shell from the first open end of the shell; welding the negative electrode connecting piece to the first ring portion of the extension ring from a side of the extension ring that faces the outside of the shell; mounting the positive electrode connecting piece in the electrode assembly from the first open end into the shell and welding the positive electrode connecting piece to the electrode set; mounting the positive electrode cover plate to the first open end and welding the positive electrode cover plate to the shell; mounting the positive electrode column into the mounting hole on the positive electrode cover plate, and welding the positive electrode column to the positive electrode connecting piece; mounting the negative electrode cover plate to the second open end of the shell, and welding the negative electrode cover plate to the second ring portion of the extension ring from a side of the negative electrode cover plate that faces the outside of the shell; and mounting the sealing cover plate to the injection hole on the negative electrode cover plate, and welding the sealing cover plate to the negative electrode cover plate.

Beneficial effect: The connections between the negative electrode cover plate and the shell, and between the negative electrode connecting piece and the shell, are changed from conventional peripheral welding to top direct welding, facilitating assembly, optimizing the welding process, achieving easy operation and good welding effect, increasing the welding area, improving product performance and product yield, and lowering product costs.

### BRIEF DESCRIPTION OF DRAWINGS

To describe the technical solutions in the embodiments of the present application or in the prior art more clearly, the following briefly describes the accompanying drawings required for describing the specific embodiments or the prior art. Apparently, the accompanying drawings in the following description show merely some embodiments of the present application, and a person of ordinary skill in the art can still derive other drawings from these drawings without inventive efforts.
FIG. 1 is a schematic structural diagram of a battery before improvement;
FIG. 2 is a schematic structural diagram of a battery according to an embodiment of the present application;
FIG. 3 is a top view of the battery shown in FIG. 2;
FIG. 4 is a cross-sectional view taken along line A-A in FIG. 3;
FIG. 5 is a partially enlarged schematic diagram of A in FIG. 4;
FIG. 6 is a partially enlarged schematic diagram of B in FIG. 4;
FIG. 7 is a schematic structural diagram of a shell according to an embodiment of the present application;
FIG. 8 is a view of the shell shown in FIG. 7 in a second end direction;
FIG. 9 is a cross-sectional view taken along line B-B in FIG. 8;
FIG. 10 is a partially enlarged schematic diagram of C in FIG. 9;
FIG. 11 is a cross-sectional view of a negative electrode cover plate according to an embodiment of the present application;
FIG. 12 is a partially enlarged schematic diagram of D in FIG. 11;
FIG. 13 is a schematic structural diagram of a negative electrode connecting piece according to an embodiment of the present application;
FIG. 14 is a bottom view of the negative electrode connecting piece shown in FIG. 13;
FIG. 15 is a cross-sectional view taken along line C-C in FIG. 14;
FIG. 16 is a schematic structural diagram of a positive electrode cover plate according to an embodiment of the present application;
FIG. 17 is a top view of the positive electrode cover plate shown in FIG. 16;
FIG. 18 is a cross-sectional view taken along line D-D in FIG. 17;
FIG. 19 is a partially enlarged schematic diagram of E in FIG. 18; and
FIG. 20 is a flowchart of a battery assembly method according to an embodiment of the present application.

### Reference numerals:

1. Shell; 101. Extension ring; 1011. First ring portion; 1012. Second ring portion; 2. Electrode set; 3. Positive electrode connecting piece; 301. Positive electrode connecting piece body; 302. Connecting portion; 4. Negative electrode connecting piece; 401. Electrode set welding area; 402. Cover plate welding area; 403. Clearance hole; 5. Positive electrode column; 6. Negative electrode cover plate; 601. Injection area; 6011. Injection hole; 602. Recessed area; 603. Raised area; 604. Overlap area; 605. Inclined annular surface; 7. Sealing cover plate; 8. Insulating set; 801. Upper plastic component; 802. Lower plastic component; 803. Sealing ring; 9. Sealing nail; 10. Positive electrode cover plate; 1001. Cover plate body; 1002. Groove ring portion; 1003. Edge ring portion; 1004. Mounting hole; 1005. Protrusion; 1006. Explosion-proof mark.

### DETAILED DESCRIPTION OF EMBODIMENTS

In order to make the objectives, technical solutions, and advantages of the embodiments of the present application clearer, the technical solutions in the embodiments of the present application will be clearly and completely described below in conjunction with the accompanying drawings in the embodiments of the present application. Apparently, the described embodiments are merely some of the embodiments of the present application, not all of them. On the basis of the embodiments in the present application, all other embodiments obtained by those skilled in the art without inventive efforts shall fall within the scope of protection of the present application.

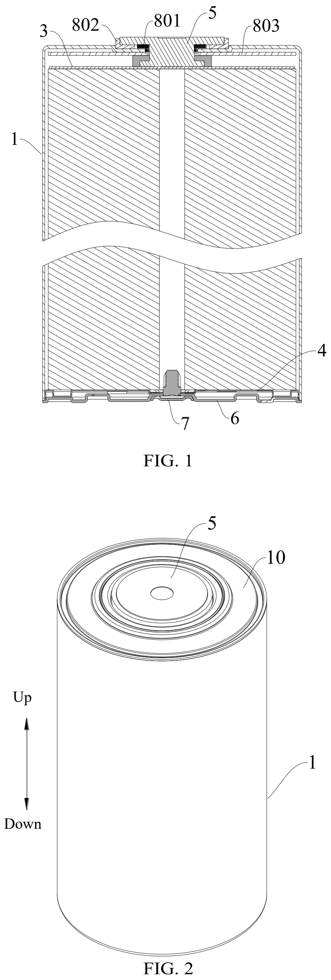

FIG. 1 illustrates a schematic structural diagram of a battery currently on the market. The battery mainly includes components such as a shell, an electrode set, an electrode column, a positive electrode connecting piece, a negative electrode connecting piece, a negative electrode cover plate, a sealing cover plate, and a sealing nail. The insulation and sealing connection between the shell and the electrode column are implemented by configuring an upper plastic component 801, a lower plastic component 802, and a sealing ring 803, involving many assembly steps and relatively high cost. In the assembly process, the positive/negative electrode connecting piece and the electrode set, the positive electrode connecting piece and the electrode column, the negative electrode connecting piece and the shell, the negative electrode cover plate and the negative electrode connecting piece, the negative electrode cover plate and the shell, are all connected by welding. For the negative electrode end of the battery, after the electrode set is mounted into the shell, the negative electrode is laser-welded to the negative electrode connecting piece, then the negative electrode connecting piece is laser-welded to the shell, and the negative electrode cover plate is laser-welded to the shell, involving complex assembly and many welding steps. In addition, the negative electrode connecting piece, the negative electrode cover plate, and the shell are usually peripherally welded, involving many steps, resulting in low efficiency, poor performance, and quality problems.

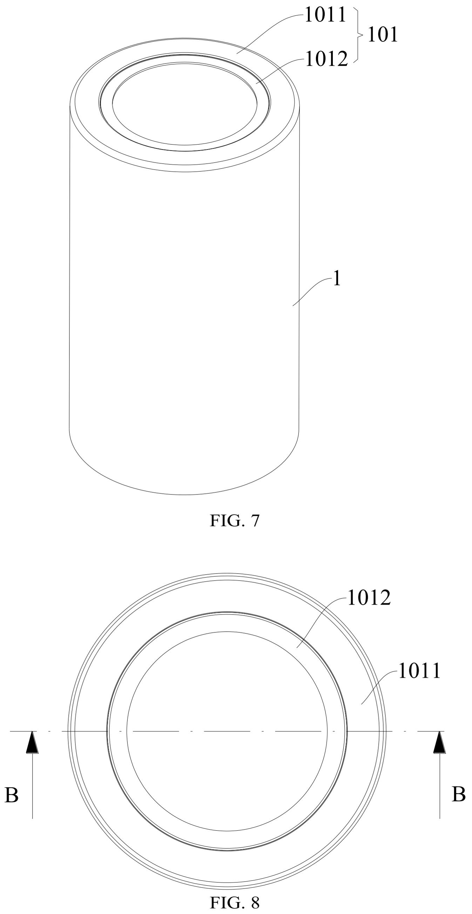

Hereinafter, the embodiments of the present application will be described in conjunction with FIG. 2 to FIG. 20.

According to the embodiments of the present application, in one aspect, a battery is provided. As shown in FIG. 2 to FIG. 19, the battery mainly includes: a shell 1, an electrode assembly, a positive electrode column 5, and a negative electrode cover plate 6.

Specifically, the shell 1 has a first end and a second end that are arranged opposite, the first end is configured as a first open end, the second end is configured with an extension ring 101, the extension ring 101 extends from an edge of the second end along a radial direction of the shell 1 towards an axis direction of the shell 1, a central area of the extension ring 101 forms a second open end, and the second open end is smaller than the first open end; the electrode assembly is mounted in the shell 1; a positive electrode cover plate 10 is arranged at the first end of the shell 1 and fixedly connected to the shell 1 to seal the first open end; the positive electrode column 5 is mounted on the positive cover plate 10 in an insulating manner and electrically connected to a positive electrode of the electrode assembly; the negative electrode cover plate 6 is arranged at the second end of the shell 1 and electrically connected to a negative electrode of the electrode assembly, and the negative electrode cover plate 6 is fixedly connected to at least a portion of the extension ring 101 to seal the second open end.

According to the battery in this embodiment, the second end of the shell 1 is designed to form the extension ring 101, then after the electrode assembly is mounted into the shell 1 from the first end of the shell 1, on the one hand, the extension ring 101 supports and limits the electrode assembly, and on the other hand, the extension ring 101 overlaps with the negative electrode cover plate 6. The negative electrode cover plate 6 overlaps at least a portion of the extension ring 101, so compared to the conventional connection method that the edge of the negative electrode cover plate 6 abuts against the shell 1, the contact area between the negative electrode cover plate 6 and the shell 1 increases, and the negative electrode cover plate 6 can be welded to the extension ring 101 from the outside of the shell 1. The conventional peripheral welding is changed to top direct welding, achieving easy assembly, high welding efficiency, easy detection, easy operation, large welding area, and high connection reliability, reducing battery performance problems, improving product yield, and lowering manufacturing costs.

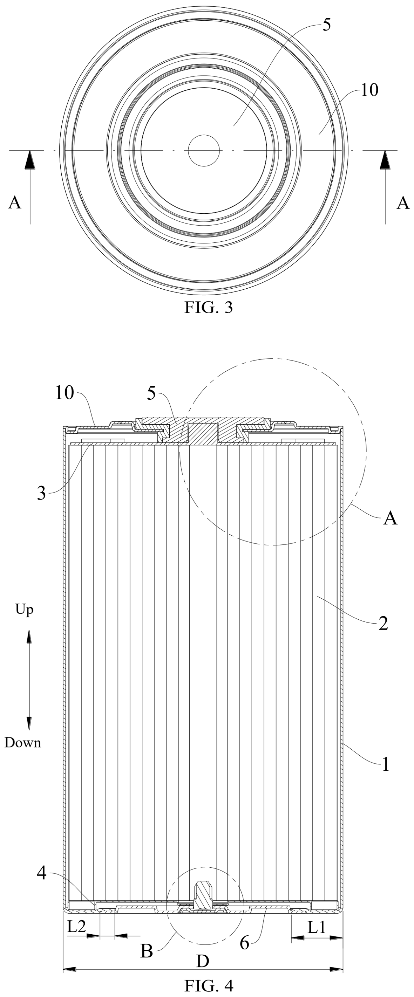

It should be noted that the first end refers to an end indicated by the arrow "up" in FIG. 2 and FIG. 4; the second end refers to an end indicated by the arrow "down" in FIG. 2 and FIG. 4; the radial direction of the shell 1 refers to a direction on the cross-section perpendicular to the axis of the shell 1; the edge of the second end refers to a lowest end of a side wall of the shell 1 in the direction indicated by the arrow "down" in FIG. 2 and FIG. 4; the extension ring 101 is circularly connected to the second end of the shell 1, and the plane where the extension ring 101 is located is perpendicular to the axis of the shell 1; the central direction of the extension ring 101 refers to a direction pointing the axis of the shell 1 on the plane where the extension ring 101 is located; if the negative electrode cover plate 6 is electrically connected to the negative electrode of the electrode assembly, the negative electrode cover plate 6 becomes a negative electrode output terminal of the battery; compared to conventional peripheral welding, the negative electrode cover plate and the extension ring 101 in this embodiment are directly welded at the top, doubling the welding area.

Preferably, the negative electrode cover plate 6 is welded to at least a portion of the extension ring 101, specifically by laser penetration welding, with easy operation and high reliability.

Preferably, the battery further includes an insulating seal 8, the insulating seal 8 has a vertically through hole, and the positive electrode column 5 is inserted into the through hole of the insulating seal 8 and abuts against an inner wall of the through hole, i.e., the insulating seal 8 wraps a circumferential surface of the positive electrode column 5. The positive electrode column 5 wrapped by the insulating seal 8 is mounted on the positive electrode cover plate 10, and the insulating seal 8 is located between the positive electrode column 5 and the positive electrode cover plate 10 to achieve insulation and sealing between the positive electrode column 5 and the positive electrode cover plate 10. It should be noted that, the insulation and sealing connection between the shell and electrode column of the conventional battery through the upper plastic component 801, the lower plastic component 802, and the sealing ring 803, i.e., separate insulation and sealing, involve many components, high cost, complex assembly process, and poor manufacturability, while the insulating seal 8 in this embodiment combines sealing and insulation, which not only improves the sealing and insulation performance, but also reduces the quantity of components and assembly steps, greatly lowers battery costs, and improves product competitiveness.

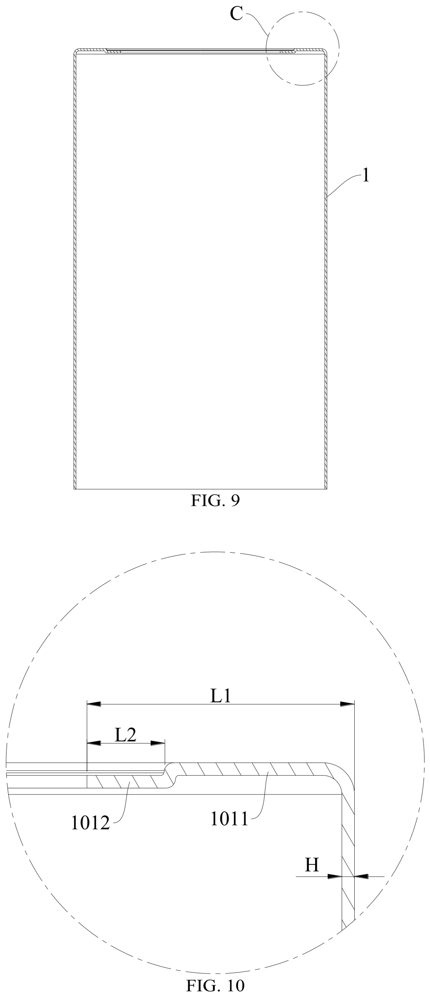

In one embodiment, the shell 1 is constructed in a cylindrical shape, a diameter of a cross-section of the shell 1 that is perpendicular to an axis of the shell is D, and an extension dimension of the extension ring 101 in the radial direction of the shell 1 is L1, where 0.06 ≤ L1/D ≤ 0.12. Further, as shown in FIG. 4 and FIG. 10, the battery is a cylindrical battery, and a cross-section of the battery that is perpendicular to an axis of the battery is circular, where D represents a diameter of the circle; the extension ring 101 is circular, where L1 represents a difference between an outer diameter and an inner diameter of the circular ring. It should be noted that the extension dimension L1 of the extension ring 101 determines the area of the extension ring 101. If L1/D is less than 0.06, the extension ring 101 is too small, leading to difficulty in product formation, poor dimensional stability, insufficient welding area between the negative electrode cover plate 6 and the shell 1, weak welding strength, and insufficient current-carrying area. If L1/D is greater than 0.12, the extension ring 101 is too large, leading to difficulty in ensuring flatness, poor stability, and compression of the welding area between the negative electrode connecting piece 4 and the electrode set 2, resulting in insufficient welding area between the negative electrode connecting piece 4 and the electrode set 2, insufficient current-carrying area, high heat generation, and poor performance. Therefore, designing a value range of L1/D between 0.06 and 0.12 can ensure sufficient strength of the extension ring 101, improve stability, provide sufficient welding area and sufficient current-carrying capacity, and improve battery performance.

In one embodiment, the extension ring 101 includes a first ring portion 1011 and a second ring portion 1012, the second ring portion 1012 is located on an inner side of the first ring portion 1011 in the radial direction of the shell 1, the second ring portion 1012 is higher than the first ring portion 1011, and the negative electrode cover plate 6 is welded to the second ring portion 1012 on a side of the second ring portion 1012 that faces the outside of the shell 1. The inner side refers to a side pointing radially towards the axis of the shell 1; the second ring portion 1012 is higher than the first ring portion 1011, i.e., in the "up-down" direction shown in FIG. 4, the second ring portion 1012 is located relatively above the first ring portion 1011; and the outside of the shell 1 refers to a side of the shell 1 that is away from the electrode set 2. By designing the second ring portion 1012 of the extension ring 101 to be higher than the first ring portion 1011, and welding the negative electrode cover plate 6 to the second ring portion 1012, on the one hand, the negative electrode cover plate 6 can be fixedly connected to the extension ring 101, and on the other hand, after the negative electrode cover plate 6 is overlapped on the second ring portion 1012, the lower surface of the negative electrode cover plate 6 is flush with the lower surface of the first ring portion 1011, thereby maintaining the flatness and aesthetics of the overall structural appearance, and improving the stability of the battery when placed.

In one embodiment, a dimension of the second ring portion 1012 in the radial direction of the shell 1 is L2, where 0.02 ≤ L2/D ≤ 0.04. Further, as shown in FIG. 4 and FIG. 10, the second ring portion 1012 of the extension ring 101 is welded to the negative electrode cover plate 6, and the first ring portion 1011 is welded to the negative electrode connecting piece 4 in the electrode assembly. If L2/D is less than 0.02, the second ring portion 1012 is too small, and the welding area between the second ring portion and the negative electrode cover plate 6 is small, resulting in weak welding strength and poor reliability. If L2/D is greater than 0.04, the second ring portion 1012 is too large, the size of the first ring portion 1011 decreases accordingly at the constant size of the extension ring 101, and the welding area between the negative electrode connecting piece 4 and the shell 1 will be compressed, resulting in insufficient current-carrying area between the negative electrode connecting piece 4 and the shell 1, poor current-carrying capacity, excessive heat generation, and poor battery performance. Therefore, designing a value range of L2/D between 0.02 and 0.04 can ensure sufficient current-carrying area between the second ring portion 1012 and the negative electrode cover plate 6, as well as between the first ring portion 1011 and the electrode assembly, thereby ensuring current-carrying capacity and improving battery performance.

In one embodiment, the electrode assembly includes an electrode set 2 and a positive electrode connecting piece 3. The positive electrode connecting piece 3 is arranged between the electrode set 2 and the positive electrode column 5, one side of the positive electrode connecting piece 3 is electrically connected to a positive electrode of the electrode set 2 and the other side of the positive electrode connecting piece 3 is electrically connected to the positive electrode column 5. The positive electrode connecting piece 3 electrically connects the positive electrode column 5 to the positive electrode of the electrode set 2 conveniently, with good stability.

Preferably, the positive electrode connecting piece 3 includes a positive electrode connecting piece body 301 and a connecting portion 302, the positive electrode connecting piece body 301 is welded to the electrode set 2, the connecting portion 302 protrudes from an upper surface of the positive electrode connecting piece body 301, and the connecting portion 302 is suitable for being welded to the positive electrode column 5. Further preferably, the positive electrode column 5 is configured with a groove that opens downwards, and the groove is suitable for cooperating with and being electrically connected to the connecting portion 302. The connecting portion 302 is inserted into the groove, to connect the positive electrode column 5 with the positive electrode of the electrode set 2 through the positive electrode connecting piece 3, and to reduce the occupied space in the up-down direction, thereby decreasing the height and volume of the entire battery. Specifically, after the connecting portion 302 is inserted into the groove of the positive electrode column 5, laser penetration welding is performed on the positive electrode column 5 and the connecting portion 302 from a position above the positive electrode column 5, to achieve a fixed connection between the positive electrode column 5 and the connecting portion 302, thereby achieving easy operation, low welding difficulty, and high welding quality. The above refers to a direction indicated by the arrow "up" in FIG. 4; and the below refers to a direction indicated by the arrow "down" in FIG. 4.

In one embodiment, the electrode assembly further includes a negative electrode connecting piece 4, the negative electrode connecting piece 4 is arranged between the negative electrode cover plate 6 and the electrode set 2, one side of the negative electrode connecting piece 4 is electrically connected to the negative electrode cover plate 6 and the other side of the negative electrode connecting piece 4 is electrically connected to a negative electrode of the electrode set 2. The negative electrode connecting piece 4 electrically connects the negative electrode cover plate 6 to the negative electrode of the electrode set 2 conveniently, with good stability.

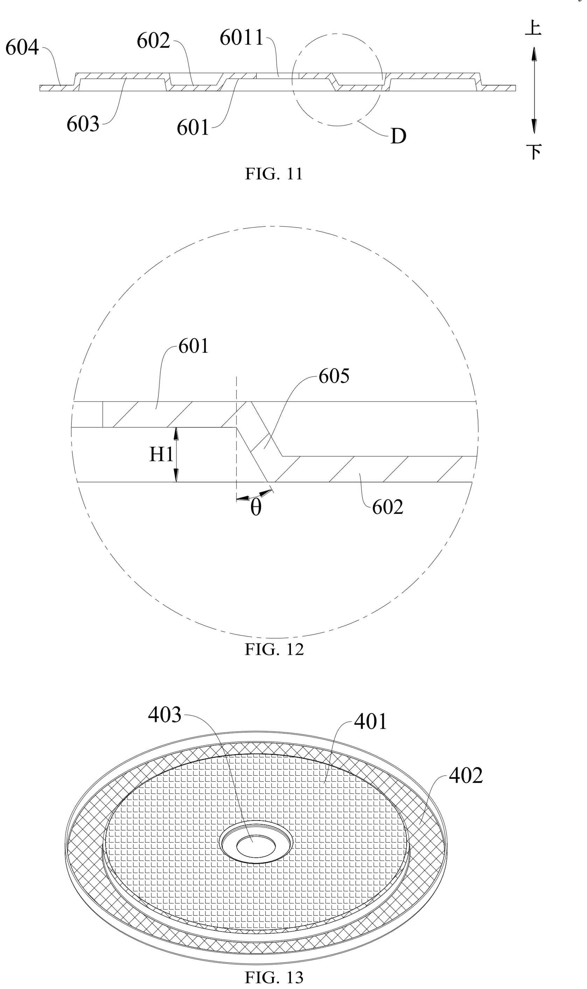

In one embodiment, the negative electrode connecting piece 4 includes an electrode set welding area 401 and a cover plate welding area 402, the cover plate welding area 402 is arranged around the electrode set welding area 401, the electrode set welding area 401 protrudes upward relative to the cover plate welding area 402, the electrode set welding area 401 is welded to the electrode set 2, and the cover plate welding area 402 is welded to the first ring portion 1011. The electrode set welding area 401 protrudes upward relative to the cover plate welding area 402, that is, in the "up-down" direction indicated by the arrows in FIG. 4 and FIG. 11, the electrode set welding area 401 is higher than the cover plate welding area 402, i.e., the electrode set welding area 401 is located relatively above the cover plate welding area 402. The electrode set 2 is located above the extension ring 101. Designing the electrode set welding area 401 to protrude upward relative to the cover plate welding area 402 facilitates the welding of the electrode set welding area 401 to the electrode set 2, and also facilitates the welding of the cover plate welding area 402 to the first ring portion 1011. In addition, the welding between the cover plate welding area 402 and the first ring portion 1011 achieves electrical connection between the negative electrode connecting piece 4 and the shell 1. The conventional peripheral welding for the negative electrode connecting piece 4 is changed to top direct welding from the outside of the bottom surface of the shell 1, reducing operation difficulty and increasing the welding area. Meanwhile, the welding between the negative electrode cover plate 6 and the second ring portion 1012 on the shell 1 achieves electrical connection between the negative electrode cover plate 6 and the shell 1, thereby achieving electrical connection between the negative electrode connecting piece 4 and the negative electrode cover plate 6, achieving good integrity, and ensuring reliable connection between the negative electrode of the electrode set 2 and the outside.

In one embodiment, the negative electrode cover plate 6 includes an injection area 601, the injection area 601 is arranged at a central position of the negative electrode cover plate 6, and the injection area 601 is provided with an injection hole 6011 for injecting electrolyte into the battery. The negative electrode cover plate 6 further includes a recessed area 602, the recessed area 602 is arranged around the injection area 601, and the recessed area 602 is lower than the injection area 601 and flush with the first ring portion 1011. By designing the recessed area 602 around the injection area 601 and designing the recessed area 602 to be lower than the injection area 601, the injection area 601 is higher than the recessed area 602, the injection area 601 is located relatively above the recessed area 602, and the injection area 601 protrudes upward relative to the recessed area 602 to form an accommodating space for mounting the sealing cover plate 7. In addition, the lower surface of the sealing cover plate 7 is maintained flush with the lower surface of the entire negative electrode cover plate 6, thereby maintaining the flatness of the overall appearance. The negative electrode cover plate 6 further includes a raised area 603, the raised area 603 is arranged around the recessed area 602, and the raised area 603 is higher than the recessed area 602 and flush with the injection area 601. The raised area 603 is beneficial to increasing the overall strength of the negative electrode cover plate 6, and ensures the flatness of the recessed area 602 and the overlap area 604. In addition, the raised area 603 is flush with the injection area 601 for easy processing. The negative electrode cover plate 6 further includes an overlap area 604, the overlap area 604 is arranged around the raised area 603, the overlap area 604 is lower than the raised area 603 and flush with the recessed area 602, and the overlap area 604 overlaps with the second ring portion 1012. The overlap area 604 is lower than the raised area 603 and flush with the recessed area 602, facilitating the overlap between the overlap area 604 and the second ring portion 1012, and ensuring that the lower surface of the negative electrode cover plate 6 is flush with the lower surface of the shell 1 after overlap, to maintain the stability of the battery when placed. The lower refers to the "down" direction indicated by the arrows in FIG. 4 and FIG. 11, while the higher refers to the "up" direction indicated by the arrows in FIG. 4 and FIG. 11. After the overlap area 604 overlaps with the second ring portion 1012, welding is carried out to achieve the fixed connection between the negative electrode cover plate 6 and the shell 1.

In one embodiment, a wall thickness of the shell 1 is H, and a lower surface of the injection area 601 is higher than a lower surface of the recessed area 602 by H1, where 1.5 ≤ H1/H ≤ 2.5. Further, as shown in FIGs. 4, 10, and 12, the wall thickness H of the shell 1 is shown in FIG. 10, and the distance H1 between the lower surface of the injection area 601 and the lower surface of the recessed area 602 is shown in FIG. 12, where the lower surface refers to a surface in the "down" direction indicated by the arrows in FIG. 4 and FIG. 12. It should be noted that the wall thickness H of the shell 1 is a definite value. The larger the ratio of H1 to H, the larger the value of H1. Conversely, the smaller the ratio of H1 to H, the smaller the value of H1. If H1/H is less than 1.5, that is, H1 is less than 1.5 times the wall thickness of the shell, the distance between the lower surface of the injection area 601 and the lower surface of the recessed area 602 is too short, so that the product is less prone to molding, and the molded size rebounds, i.e., the size is unstable. If H1/H is greater than 2.5, that is, H1 is greater than 1.5 times the wall thickness of the shell, the negative electrode cover plate 6 occupies a relatively large space in the up-down direction, so that the volume utilization decreases. Therefore, designing a value range of H1/H between 1.5 and 2.5 not only facilitates molding, but also can maintain sufficient strength and increase volume utilization. Preferably, the value of H1/H is 2.

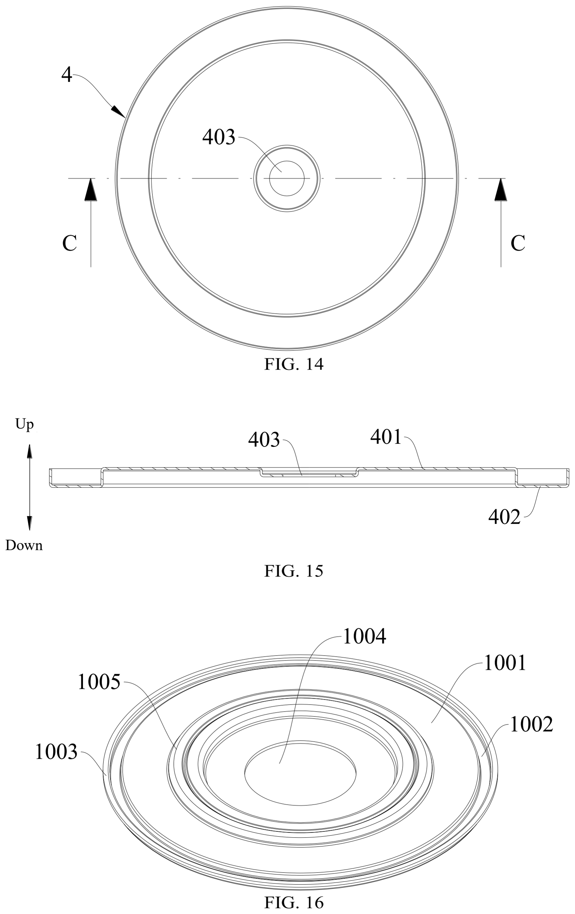

In one embodiment, a connecting portion between the injection area 601 and the recessed area 602 is an inclined annular surface 605 arranged at an angle with the axis of the shell 1, and an angle between the inclined annular surface 605 and the axis of the shell 1 is θ, where 15° ≤ θ ≤ 60°. Further, as shown in FIG. 14, the dashed line is a straight line parallel to the axis, and the angle between the inclined annular surface 605 and the dashed line is the angle with the axis of the shell 1. The connecting portion between the injection area 601 and the recessed area 602 is designed in an inclined shape for easy processing, with smooth transition and less stress. Meanwhile, the inclined annular surface 605 makes the injection area 601 flared towards the outside of the shell 1. The side of the inclined annular surface 605 that faces the outside of the shell 1 provides guidance for the sealing cover plate 7 during the mounting of the sealing cover plate 7, has a certain positioning and guiding effect, and facilitates the mounting of the sealing cover plate 7. The angle θ between the inclined annular surface 605 and the axis of the shell 1 is 15° to 60°, which facilitates the positioning and mounting of the sealing cover plate 7 and facilitates processing.

In one embodiment, the battery further includes a sealing cover plate 7, and the sealing cover plate 7 is arranged in the injection area 601 to seal the injection hole 6011. After the injection is completed, the injection hole 6011 needs to be closed to prevent the electrolyte from flowing out and ensure the safety of the battery. By designing the sealing cover plate 7 in the injection area 601, the injection hole 6011 can be closed to ensure the sealing property of the battery.

Preferably, the battery further includes a sealing nail 9, and the sealing nail 9 is inserted into the injection hole 6011 and located on a side of the sealing cover plate 7 that faces the interior of the shell 1, to further improve the sealing property of the injection hole 6011. It should be noted that the negative electrode connecting piece 4 is configured with a clearance hole 403 at a position corresponding to the injection hole 6011, to allow the sealing nail 9 to pass through.

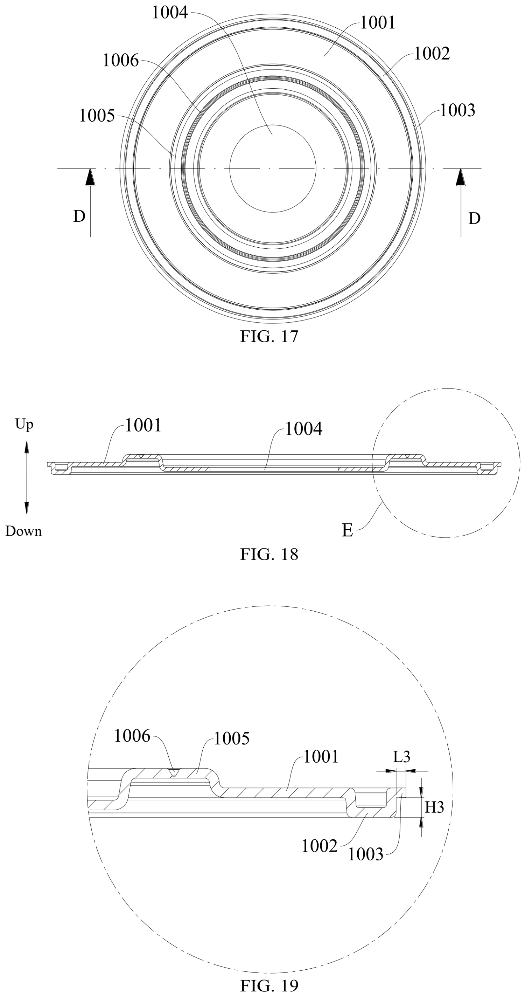

In one embodiment, the positive electrode cover plate 10 includes a cover plate body 1001, a groove ring portion 1002, and an edge ring portion 1003 connected in sequence from the inside out along a radial direction of the positive electrode cover plate 10, the cover plate body 1001 is flush with the edge ring portion 1003, the groove ring portion 1002 is recessed downward relative to the cover plate body 1001 and the edge ring portion 1003, the cover plate body 1001 is configured with a mounting hole 1004, the positive electrode column 5 is inserted into the mounting hole 1004, a side wall of the groove ring portion 1002 that faces the shell 1 abuts against an inner wall of the shell 1, and a lower surface of the edge ring portion 1003 abuts against an upper end surface of the shell 1, where a dimension of the edge ring portion 1003 in the radial direction of the positive electrode cover plate 10 is L3, a lower surface of the groove ring portion 1002 is lower than the lower surface of the edge ring portion 1003 by H3, L3=H, and 1.2 ≤ H3/H ≤ 2.5. The radial direction of the positive electrode cover plate 10 refers to a direction perpendicular to the axis of the positive electrode cover plate 10. The "from the inside out along the radial direction of the positive electrode cover plate 10" refers to a direction from a central position of the positive electrode cover plate 10 to an edge position. The cover plate body 1001 is flush with the edge ring portion 1003, that is, the upper surface of the cover plate body 1001 is flush with the upper surface of the edge ring portion 1003. The upper surface refers to a surface in the "up" direction indicated by the arrows in FIG. 4 and FIG. 18. The lower surface refers to a surface in the "down" direction indicated by the arrows in FIG. 4 and FIG. 18. The upper end surface of the shell 1 refers to a surface in the "up" direction indicated by the arrow in FIG. 4, i.e., a surface of the first open end of the shell 1. The side wall of the groove ring portion 1002 that faces the shell 1 refers to a side wall of the groove ring portion 1002 that is connected to the edge ring portion 1003.

It should be noted that the positive electrode cover plate 10 is provided with the groove ring portion 1002 recessed downward relative to the cover plate body 1001 and the edge ring portion 1003, and the groove ring portion 1002 is located near the edge of the positive electrode cover plate 10, so when the positive electrode cover plate 10 is mounted to the first open end of the shell 1, the lower surface of the edge ring portion 1003 abuts against the upper end of the shell 1, achieving axial limit of the positive electrode cover plate 10. Meanwhile, the side wall of the groove ring portion 1002 near the edge of the positive electrode cover plate 10 abuts against the inner wall of the shell 1, further increasing radial limit between the positive electrode cover plate 10 and the shell 1, and increasing relative stability between the two. In addition, the side wall of the groove ring portion 1002 is welded to the shell 1, and the edge ring portion 1003 is welded to the upper end of the shell 1, with an increase in welding area, high connection strength, and good stability.

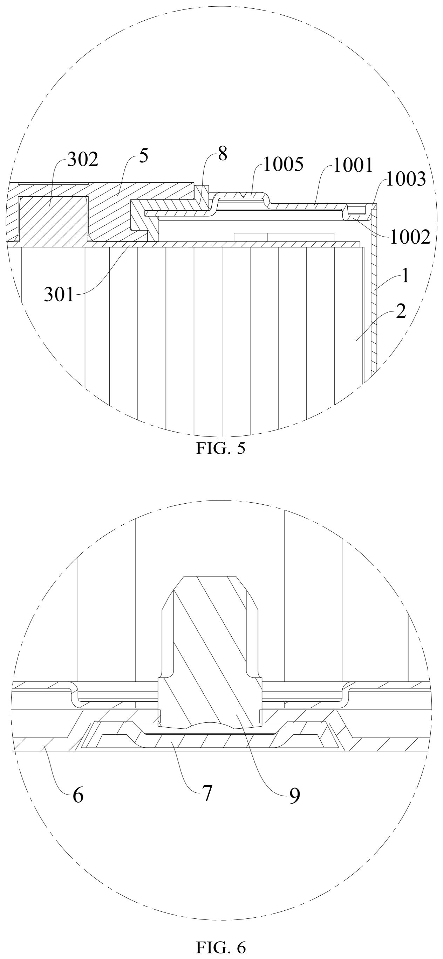

Further, as shown in FIGs. 5, 10, and 19, by designing the dimension L3 of the edge ring portion 1003 in the radial direction of the positive electrode cover plate 10 to be equal to the wall thickness H of the shell 1, and designing the edge ring portion 1003 to directly overlap with the upper end of the shell 1, when the side wall of the groove ring portion 1002 abuts against the inner wall of the shell 1, the outer edge of the positive electrode cover plate 10 can be exactly flush with the outer wall of the shell 1, thereby making the overall appearance smooth and tidy, and avoiding unnecessary damage. The distance between the lower surface of the groove ring portion 1002 and the lower surface of the edge ring portion 1003 is H3. If H3/H is less than 1.2, H3 is too small, and the distance between the groove ring portion 1002 and the edge ring portion 1003 is too short in the "up-down" direction, so that the product is less prone to molding and has poor dimensional stability and low strength due to rebound after molding. If H3/H is greater than 2.5, H3 is too large, and the distance between the groove ring portion 1002 and the edge ring portion 1003 is too long. Sufficient distance is required between the positive electrode cover plate 10 and the positive electrode connecting piece 3 in the up-down direction to ensure insulation between the two, the lower surface of the groove ring portion 1002 on the positive electrode cover plate 10 is closest to the positive electrode connecting piece 3, and if H3 is too large, the overall height of the shell 1 inevitably increases to ensure sufficient distance between the positive electrode cover plate 10 and the positive electrode connecting piece 3, so that the overall volume of the battery increases and the space utilization is low, compromising the optimization of battery size. Therefore, deigning the ratio of H3 to H to be 1.2 to 2.5 not only facilitates processing, but also reduces the size of the battery in the up-down direction.

Preferably, the positive electrode cover plate 10 is further provided with an explosion-proof mark 1006, the explosion-proof mark 1006 surrounds the circumference of the mounting hole 1004 to form an explosion-proof valve, and the strength of the explosion-proof mark 1006 is lower than the strength of other parts of the positive electrode cover plate 10. When the gas pressure inside the battery is too high, the explosion-proof mark 1006 first breaks, forming an exhaust channel to discharge high-temperature smoke inside the battery, thereby preventing battery explosion due to excessive internal gas pressure. By designing the explosion-proof mark 1006 around the mounting hole 1004, after the explosion-proof mark 1006 breaks, the area surrounded by the explosion-proof mark 1006 can pop up as a whole, and the insulating seal 8 and positive electrode column 5 mounted in the mounting hole 1004 can detach from the battery as a whole, thereby increasing the exhaust area, ensuring disconnection of the battery from an external circuit, preventing the occurrence of battery explosion caused by thermal runaway, and improving safety.

Further preferably, the positive electrode cover plate 10 is configured with a protrusion 1005 that protrudes from the upper surface of the cover plate body 1001, and the explosion-proof mark 1006 is arranged on the protrusion 1005. Further, as shown in FIG. 4, the protrusion 1005 provides radial limit for the mounting of the insulating seal 8, which can increase structural stability. The explosion-proof mark 1006 is arranged on the protrusion 1005, which can ensure that the explosion-proof mark 1006 is closer to the peripheral edge of the insulating seal 8, minimize the area enclosed by the explosion-proof mark 1006, and ensure that the explosion-proof mark 1006 can break in a timely manner when the gas pressure inside the battery reaches the level of opening the explosion-proof valve, to improve battery safety. The upper surface refers to a surface in the "up" direction indicated by the arrows in FIG. 4 and FIG. 15.

It should be noted that the injection hole 6011 is used to inject electrolyte into the interior of the battery. In the prior art, the injection hole 6011 and the explosion-proof mark 1006 of the battery are usually arranged on the same end surface. The electrolyte, when injected through the injection hole 6011, easily splashes onto the explosion-proof mark 1006, to contaminate the explosion-proof mark 1006 and break down the explosion-proof mark 1006, resulting in leakage and great risk. In this embodiment, the injection hole 6011 is arranged on the negative electrode cover plate 6, that is, at an end away from the positive electrode cover plate 10. Therefore, the injection hole 6011 is far away from the explosion-proof mark 1006 on the positive electrode cover plate 10, which can effectively prevent contamination of the explosion-proof mark 1006 during injection and further ensure battery safety.

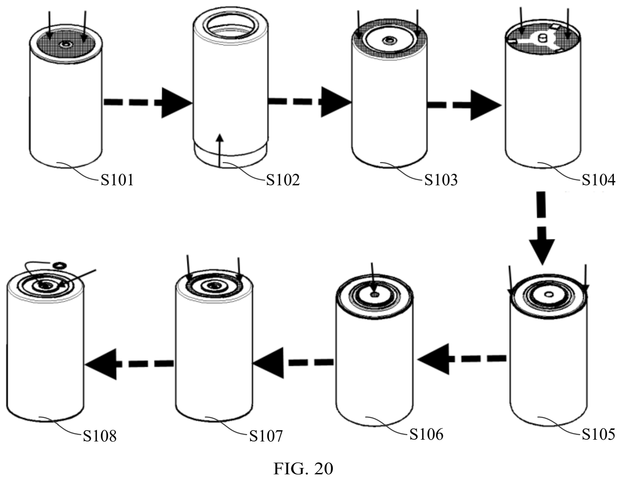

According to the embodiments of the present application, in another aspect, a battery assembly method is further provided to assemble the aforementioned battery. As shown in FIG. 20, the battery assembly method includes the following steps:

Step S101: Weld the electrode set 2 in the electrode assembly to the negative electrode connecting piece 4 to form a first assembly.

Specifically, one end of the electrode set 2 extends out of a negative electrode current collector, and the negative electrode connecting piece 4 is attached to the end of the electrode set 2 that extends out of the negative electrode current collector, and the welding area 401 of the negative electrode connector 4 is welded to the negative electrode current collector of the electrode set 2 to achieve an electrical connection between the negative electrode connecting piece 4 and the negative electrode of the electrode set 2.

Step S102: Mount the first assembly into the shell 1 from the first open end of the shell 1.

It should be noted that the size of the first open end is the same as the cross-sectional size of the shell 1, which can allow the first assembly to pass through. After the first assembly is mounted into the shell 1, the negative electrode connecting piece 4 is located at an end of the shell 1 away from the first open end.

Step S103: Weld the negative electrode connecting piece 4 to the first ring portion 1011 of the extension ring 101 from a side of the extension ring 101 that faces the outside of the shell 1.

Specifically, the welding method between the negative electrode connecting piece 4 and the first ring portion 1011 is laser penetration welding, which is operated from the side of the extension ring 101 that faces the outside of the shell 1, facilitating observation and control and achieving easy operation and high welding quality. By welding the negative electrode connecting piece 4 to the first ring portion 1011, the electrical connection between the negative electrode connecting piece 4 and the extension ring 101 is achieved, thereby achieving the electrical connection between the negative electrode of the electrode set 2 and the extension ring 101, i.e., the electrical connection between the negative electrode of the electrode set 2 and the shell 1, and achieving the fixation of the electrode set 2 and the negative electrode connecting piece 4 relative to the shell 1, with good connection stability and less shaking of the electrode set 2 relative to the shell 1.

Step S104: Mount the positive electrode connecting piece 3 in the electrode assembly from the first open end into the shell 1 and weld the positive electrode connecting piece to the electrode set 2.

Specifically, the end of the electrode set 2 that is away from the negative electrode connecting piece 4 (i.e., the end of the electrode set 2 near the first open end of the shell 1 after the electrode set 2 is mounted into the shell 1) extends out of the positive electrode current collector, the positive electrode connecting piece 3 is mounted into the shell 1 from the first open end and attached to the end of the electrode set 2 that extends out of the positive electrode current collector, and then the positive electrode connecting piece body 301 is welded to the positive electrode current collector of the electrode set 2 through top laser penetration welding from a position above the positive electrode connecting piece 3, to achieve electrical connection between the positive electrode connecting piece 3 and the positive electrode of the electrode set 2, with easy operation and good welding effect.

Step S105: Mount the positive electrode cover plate 10 to the first open end and weld the positive electrode cover plate to the shell 1.

Specifically, the positive electrode cover plate 10 is first fastened to the first open end of the shell 1, and then the positive electrode cover plate 10 is welded to the shell 1, to achieve fixed connection between the positive electrode cover plate 10 and the shell 1. The welding between the positive electrode cover plate 10 and the shell 1 includes welding between the edge ring portion 1003 of the positive electrode cover plate 10 and the upper port of the shell 1, and welding between the groove ring portion 1002 and the inner wall of the shell 1, where the edge ring portion 1003 overlaps with the upper port of the shell 1, and the groove ring portion 1002 abuts against the inner wall of the upper end port of the shell 1, increasing contact area between the positive electrode cover plate 10 and the shell 1. Through welding connection, the connection between the positive electrode cover plate 10 and the shell 1 is firm and stable.

Step S106: Mount the positive electrode column 5 into the mounting hole 1004 on the positive electrode cover plate 10, and weld the positive electrode column 5 to the positive electrode connecting piece 3.

Mounting the positive electrode column 5 into the mounting hole 1004 on the positive electrode cover plate 10 specifically includes the following steps: step S201: inserting the positive electrode column 5 into the insulating seal 8, so that the insulating seal 8 wraps the circumferential surface of the positive electrode column 5; and step S202: mounting the positive electrode column 5 and the insulating seal 8 together into the mounting hole 1004, to achieve the mounting of the positive electrode column 5 on the positive cover plate 10.

Specifically, the positive electrode column 5 is riveted to the positive electrode cover plate 10, and an insulating seal is further mounted between the positive electrode column 5 and the mounting hole 1004 to insulate and seal the positive electrode column 5 and the positive electrode cover plate 10; the groove that opens downward on the positive electrode column 5 is fitted with the connecting portion 302 on the positive electrode connecting piece 3, the connecting portion 302 is inserted into the groove, and then laser penetration welding is performed from the position above the positive electrode column 5 to weld the positive electrode column 5 with the connecting portion 302, thereby achieving electrical connection between the positive electrode column 5 and the positive electrode connecting piece 3 easily, and solving the problem of difficult insertion of the electrode set into the shell.

Step S107: Mount the negative electrode cover plate 6 to the second open end of the shell 1, and weld the negative electrode cover plate 6 to the second ring portion 1012 of the extension ring 101 from a side of the negative electrode cover plate 6 that faces the outside of the shell 1.

Specifically, the negative electrode cover plate 6 is used to close the second open end of the shell 1. The negative electrode cover plate 6 is overlapped with the second ring portion 1012 of the extension ring 101 from the outside of the shell 1, and then laser penetration welding is performed on the overlapped part from the side of the negative electrode cover plate 6 that faces the outside of the shell 1 to achieve welding between the negative electrode cover plate 6 and the shell 1. The overlapped area between the negative electrode cover plate 6 and the second ring portion 1012 is at least twice as large as that of conventional peripheral welding, so the welding area increases and the connection is stable. The top direct welding from the outside of the shell 1 facilitates operation and observation, optimizes the welding process, improves the manufacturability of the product, and can improve product yield and lower production costs.

It should be noted that the negative electrode cover plate 6 is welded to the second ring portion 1012, achieving electrical connection between the negative electrode cover plate 6 and the extension ring 101. In addition, the negative electrode connecting piece 4 is welded to the first ring portion 1011 to achieve electrical connection between the negative electrode connecting piece 4 and the extension ring 101. Therefore, through the connection function of the extension ring 101, the electrical connection between the negative electrode cover plate 6 and the negative electrode connecting piece 4 is achieved, and the electrical connection between the negative electrode cover plate 6 and the negative electrode of the electrode set 2 is further achieved. Therefore, the negative electrode cover plate 6 can serve as a negative electrode output terminal of the battery. When step 107 above is performed, the second end of the shell 1 can be placed upward to facilitate the mounting and welding of the negative electrode cover plate 6. The battery assembly process is completed on an operating platform. The second end of the shell 1 is placed upward, that is, the second end faces away from the operating platform.

Step S108: Mount the sealing cover plate 7 to the injection hole 6011 on the negative electrode cover plate 6, and weld the sealing cover plate 7 to the negative electrode cover plate 6.

Specifically, the sealing cover plate 7 is first mounted into the injection area 601 of the negative electrode cover plate 6, and then the sealing cover plate 7 is welded to the injection area 601 to seal the injection hole 6011. The welding process is operated from the side of the sealing cover plate 7 that is away from the injection area 601, facilitating operation and observation and improving the welding quality.

The following steps are further included before step S108 above:
Step S109: Inject electrolyte to the interior of the shell 1 through the injection hole 6011 on the negative electrode cover plate 6. Specifically, an injection nozzle is inserted into the injection hole 6011, and the electrolyte is injected to the interior of the shell 1 through the injection nozzle.
Step S110: Mount the sealing nail 9 into the injection hole 6011. The injection hole 6011 is preliminarily sealed by the sealing nail 9, to increase the sealing property at the injection hole 6011.

The battery is assembled through the above steps. The connections between the negative electrode cover plate 6 and the shell 1, and between the negative electrode connecting piece 4 and the shell 1, are changed from conventional peripheral welding to top direct welding, facilitating assembly, optimizing the welding process, achieving easy operation and good welding effect, increasing the welding area, improving product performance and product yield, and lowering product costs.

Although the embodiments of the present application are described in conjunction with the drawings, a person skilled in the art may make various modifications and variations without departing from the spirit and scope of the present application, and such modifications and variations fall within the scope defined by the appended claims.

### Industrial Applicability

By designing the second end of the shell to form the extension ring, after the electrode assembly is mounted into the shell from the first end, the extension ring not only supports and limits the electrode assembly, but also overlaps with the negative electrode cover plate. The negative electrode cover plate overlaps at least a portion of the extension ring, so compared to the conventional connection method that the edge of the negative electrode cover plate abuts against the shell, the contact area between the negative electrode cover plate and the shell increases, and the negative electrode cover plate can be welded to the extension ring from the outside of the shell. The conventional peripheral welding is changed to top direct welding, achieving easy assembly, high welding efficiency, easy detection and operation, and high connection reliability, increasing the welding area, reducing battery performance problems, improving product yield, and lowering manufacturing costs.

## Claims

1. A battery comprising:
a shell having a first end and a second end that are arranged opposite, wherein the first end is configured as a first open end, the second end is configured with an extension ring, the extension ring extends from an edge of the second end along a radial direction of the shell towards an axis direction of the shell, a central area of the extension ring forms a second open end, and the second open end is smaller than the first open end;
an electrode assembly mounted in the shell;
a positive electrode cover plate arranged at the first end of the shell and fixedly connected to the shell to seal the first open end;
a positive electrode column mounted on the positive cover plate in an insulating manner and electrically connected to a positive electrode of the electrode assembly; and
a negative electrode cover plate arranged at the second end of the shell and electrically connected to a negative electrode of the electrode assembly, wherein the negative electrode cover plate is fixedly connected to at least a portion of the extension ring to seal the second open end.

2. The battery as claimed in claim 1, wherein the shell is constructed in a cylindrical shape, a diameter of a cross-section of the shell that is perpendicular to an axis of the shell is D, and an extension dimension of the extension ring in the radial direction of the shell is L1, wherein 0.06 ≤ L1/D ≤ 0.12.

3. The battery as claimed in claim 2, wherein the extension ring comprises a first ring portion and a second ring portion, the second ring portion is located on an inner side of the first ring portion in the radial direction of the shell, the second ring portion is higher than the first ring portion, and the negative electrode cover plate is welded to the second ring portion on a side of the second ring portion that faces an outside of the shell.

4. The battery as claimed in claim 3, wherein a dimension of the second ring portion in the radial direction of the shell is L2, wherein 0.02 ≤ L2/D ≤ 0.04.

5. The battery as claimed in claim 3, wherein the electrode assembly comprises:
an electrode set;
a positive electrode connecting piece arranged between the electrode set and the positive electrode column, wherein one side of the positive electrode connecting piece is electrically connected to a positive electrode of the electrode set and the other side of the positive electrode connecting piece is electrically connected to the positive electrode column; and/or
a negative electrode connecting piece arranged between the negative electrode cover plate and the electrode set, wherein one side of the negative electrode connecting piece is electrically connected to the negative electrode cover plate and the other side of the negative electrode connecting piece is electrically connected to a negative electrode of the electrode set.

6. The battery as claimed in claim 5, wherein the negative electrode connecting piece comprises an electrode set welding area and a cover plate welding area, the cover plate welding area is arranged around the electrode set welding area, the electrode set welding area protrudes upward relative to the cover plate welding area, the electrode set welding area is welded to the electrode set, and the cover plate welding area is welded to the first ring portion.

7. The battery as claimed in any one of claims 3 to 6, wherein the negative electrode cover plate comprises:
an injection area arranged at a central position of the negative electrode cover plate, wherein the injection area is provided with an injection hole; and/or
a recessed area arranged around the injection area, wherein the recessed area is lower than the injection area and flush with the first ring portion; and/or
a raised area arranged around the recessed area, wherein the raised area is higher than the recessed area and flush with the injection area; and/or
an overlap area arranged around the raised area, wherein the overlap area is lower than the raised area and flush with the recessed area, and the overlap area overlaps with the second ring portion.

8. The battery as claimed in claim 7, wherein a wall thickness of the shell is H, and a lower surface of the injection area is higher than a lower surface of the recessed area by H1, wherein 1.5 ≤ H1/H ≤ 2.5; and/or a connecting portion between the injection area and the recessed area is an inclined annular surface arranged at an angle with the axis of the shell, and an angle between the inclined annular surface and the axis of the shell is θ, wherein 15° ≤ θ ≤ 60°.

9. The battery as claimed in claim 7, wherein the battery further comprises a sealing cover plate, and the sealing cover plate is arranged in the injection area to seal the injection hole.

10. The battery as claimed in claim 8, wherein the positive electrode cover plate comprises a cover plate body, a groove ring portion, and an edge ring portion connected in sequence from the inside out along a radial direction of the positive electrode cover plate, the cover plate body is flush with the edge ring portion, the groove ring portion is recessed downward relative to the cover plate body and the edge ring portion, the cover plate body is configured with a mounting hole, the positive electrode column is inserted into the mounting hole, a side wall of the groove ring portion that faces the shell abuts against an inner wall of the shell, and a lower surface of the edge ring portion abuts against an upper end surface of the shell, wherein a dimension of the edge ring portion in the radial direction of the positive electrode cover plate is L3, a lower surface of the groove ring portion is lower than the lower surface of the edge ring portion by H3, L3=H, and 1.2 ≤ H3/H ≤ 2.5.

11. A battery assembly method, wherein the battery assembly method is used to assemble the battery as claimed in any one of claims 1 to 10, and the battery assembly method comprises:
welding the electrode set in the electrode assembly to the negative electrode connecting piece to form a first assembly;
mounting the first assembly into the shell from the first open end of the shell;
welding the negative electrode connecting piece to the first ring portion of the extension ring from a side of the extension ring that faces the outside of the shell;
mounting the positive electrode connecting piece in the electrode assembly from the first open end into the shell and welding the positive electrode connecting piece to the electrode set;
mounting the positive electrode cover plate to the first open end and welding the positive electrode cover plate to the shell;
mounting the positive electrode column into the mounting hole on the positive electrode cover plate, and welding the positive electrode column to the positive electrode connecting piece;
mounting the negative electrode cover plate to the second open end of the shell, and welding the negative electrode cover plate to the second ring portion of the extension ring from a side of the negative electrode cover plate that faces the outside of the shell; and
mounting the sealing cover plate to the injection hole on the negative electrode cover plate, and welding the sealing cover plate to the negative electrode cover plate.
